# DEMANDE DE BREVET EUROPEEN

(11) **EP 0 559 528 A1**
(43) Date de publication de la demande: **08.09.1993**
(21) Numéro de dépôt: 93400498.7
(22) Date de dépôt: 26.02.1993
(51) Int. Cl.: G02F 1/1333

(54) **Machine d'assemblage pour cellules à cristaux liquides**

(30) Priorité: 03.03.1992 FR 9202515
(71) Demandeur: FRANCE TELECOM, F-75015 Paris (FR); SOCIETE D'APPLICATIONS GENERALES D'ELECTRICITE ET DE MECANIQUE SAGEM, F-75783 Paris Cédex 16 (FR)
(72) Inventeur: Vinouze, Bruno, F-22710 Penvenan (FR); Baumes, René, F-95130 Franconville (FR)
(74) Mandataire: Signore, Robert

(57) **Abrégé**

La machine comprend un cadre (11) et un film (12) qui permet de presser l'un sur l'autre les substrats (1, 2), sous un plateau (4). On peut alors polymériser par points un joint de colle (3) pour assembler les deux substrats. Des moyens de déplacement précis (7, 8, 9, 10) et des moyens de visée (13, 14, 15) sont également prévus.

Application à la réalisation de cellules à cristaux liquides.

## Description

### Domaine technique

La présente invention a pour objet une machine d'assemblage de précision pour cellules à cristaux liquides.

### Etat de la technique

L'une des étapes importantes de la fabrication d'une cellule à cristaux liquides est l'assemblage d'une première plaque de verre recouverte d'une contre-électrode généralement en ITO (oxyde d'étain et d'indium), avec une seconde plaque de verre supportant des motifs gravés, ces motifs constituant une matrice de points d'affichage ou pixels. Un joint de colle disposé à la périphérie de la première plaque assure la fixation des deux plaques. Des microbilles ménagent un espacement de quelques microns entre les deux plaques. Cet espacement est ensuite rempli de cristaux liquides.

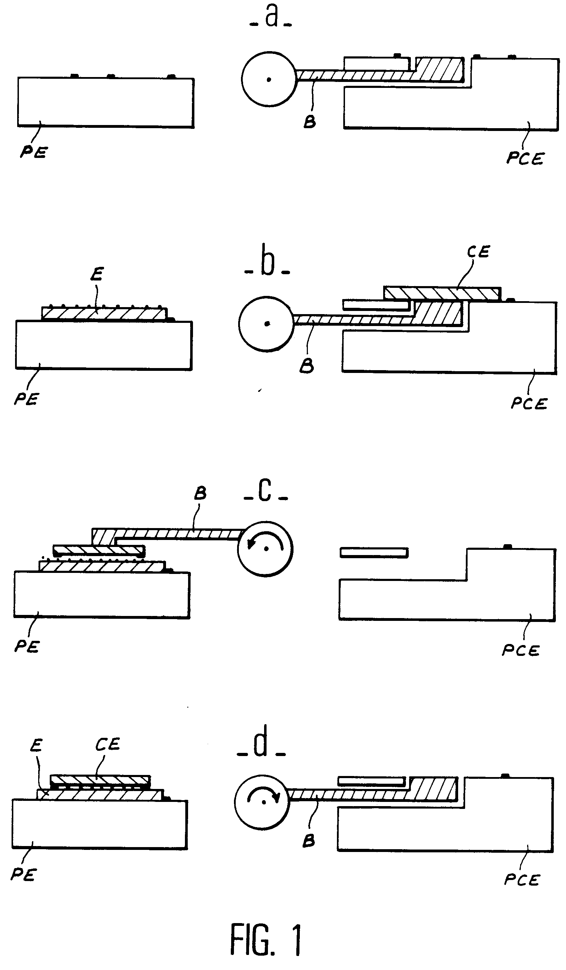

Habituellement, une machine d'assemblage est constituée comme illustré sur la figure 1 annexée. Cette machine comprend (cf partie a de la figure) un porte-électrode PE et un porte-contre-électrode PCE, tous deux munis de pions de prépositionnement. La première plaque CE équipée de sa contre-électrode et du joint de colle UV et la seconde plaque E équipée de ses électrodes et des espaceurs sont positionnées sur les supports PCE et PE (partie b). Chacune des deux plaques est maintenue par aspiration sur son porte-plaque. Un bras B est prévu pour retourner la première plaque CE et la superposer à la seconde (partie c).

Après alignement, la plaque contre-électrode est posée sur la plaque électrode ; l'aspiration qui maintenait la première plaque collée au bras est supprimée et celui-ci est ramené en position de repos (partie d).

Après avoir coupé l'aspiration sous la plaque électrode E, on peut disposer de la cellule ; celle-ci doit subir alors une polymérisation de la colle par pressage sous vide puis exposition à des ultraviolets.

De telles machines ne permettent pas d'assurer un pressage uniforme d'une plaque sur l'autre, ni d'assurer, in situ, l'opération de collage. En effet, si les deux plaques sont bien mises en regard l'une de l'autre, elle ne sont pas collées l'une à l'autre à ce stade. Il faut donc disposer d'un autre poste de travail, ce qui suppose un déchargement de la cellule préassemblée puis un chargement dans un châssis pour pressage sous vide et insolation de la colle sous ultraviolets. Ces opérations multiples entraînent systématiquement des défauts d'alignement.

Par ailleurs, ces machines de l'art antérieur ne permettent pas d'effectuer un alignement précis d'une plaque sur l'autre au moment du préassemblage. Or, il faut savoir que, pour assembler une contre-électrode possédant un masque optique avec une électrode en forme de matrice active, la précision de positionnement est de l'ordre de quelques microns. Il est donc indispensable de prévoir des moyens permettant l'alignement précis de repères se trouvant sur les deux plaques.

### Exposé de l'invention

La présente invention a justement pour but de remédier à ces inconvénients. A cette fin, elle propose une machine permettant un pressage uniforme des deux plaques l'une sur l'autre, indépendamment des défauts géométriques que ces plaques peuvent présenter. Grâce à ce pressage perfectionné, il est possible, in situ, de polymériser par points le joint de colle, sans avoir à décharger la cellule pour la porter dans un autre poste de travail. Par ailleurs, la machine de l'invention utilise des moyens de visée perfectionnés et des moyens de déplacement très fin, qui permettent d'obtenir un meilleur alignement des plaques de la cellule.

Tous ces buts sont atteints grâce à l'utilisation de moyens pris séparément ou en combinaison, consistant en :
- un film souple maintenu par un cadre périphérique, ce film, par aspiration, venant prendre par dessous la plaque inférieure pour la plaquer sur la plaque supérieure tenu par un plateau,
- des moyens d'insolation agissant par points sur un joint de colle déposé à la périphérie de la plaque la plus petite et ce, à travers une platine support, lorsque les deux plaques sont pressées l'une sur l'autre par le film souple,
- une optique de visée et des moteurs pas à pas agissant sur le déplacement de la platine et permettant de régler finement l'alignement d'une plaque sur l'autre.

### Brève description des dessins

- La figure 1, déjà décrite, montre une machine d'assemblage conforme à l'art antérieur,
- la figure 2 montre, en coupe, une vue générale de la machine de l'invention, le plateau étant placé au-dessus de la platine,
- la figure 3 montre schématiquement, en vue de dessus, le plateau et la platine, côte à côte,
- les figures 4a à 4f illustrent différentes phases de fonctionnement de la machine,
- la figure 5 illustre un détail des moyens de visée et d'insolation.

### Exposé détaillé d'un mode de réalisation

Dans la description qui suit, on désignera par "substrats", les plaques recouvertes de leur contre-électrode ou de leurs électrodes, sans que cette désignation n'implique de limitation quelconque sur la nature exacte des électrodes ni sur leur composition. Ces deux substrats sont référencés respectivement par les références numériques 1 et 2.

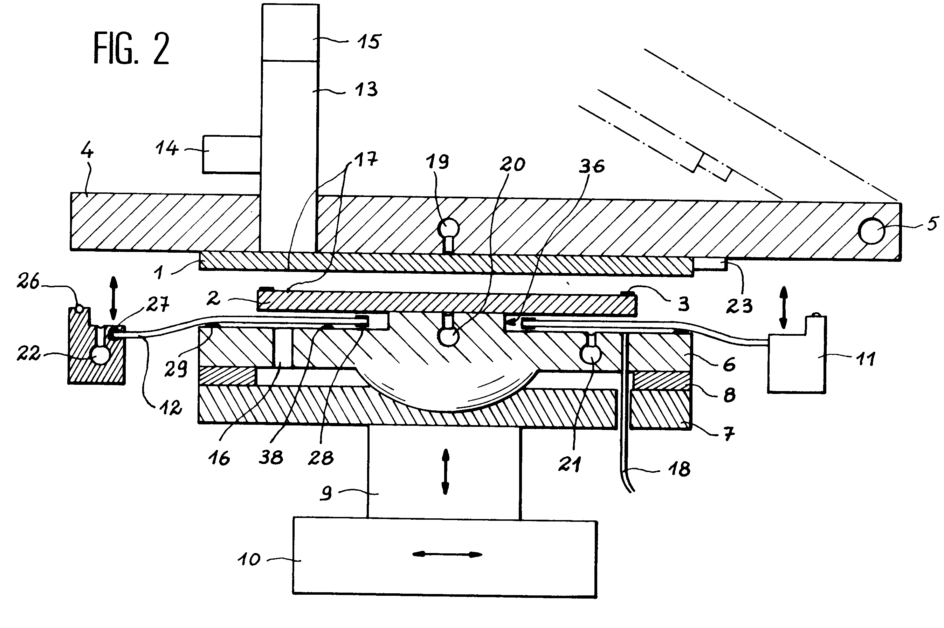

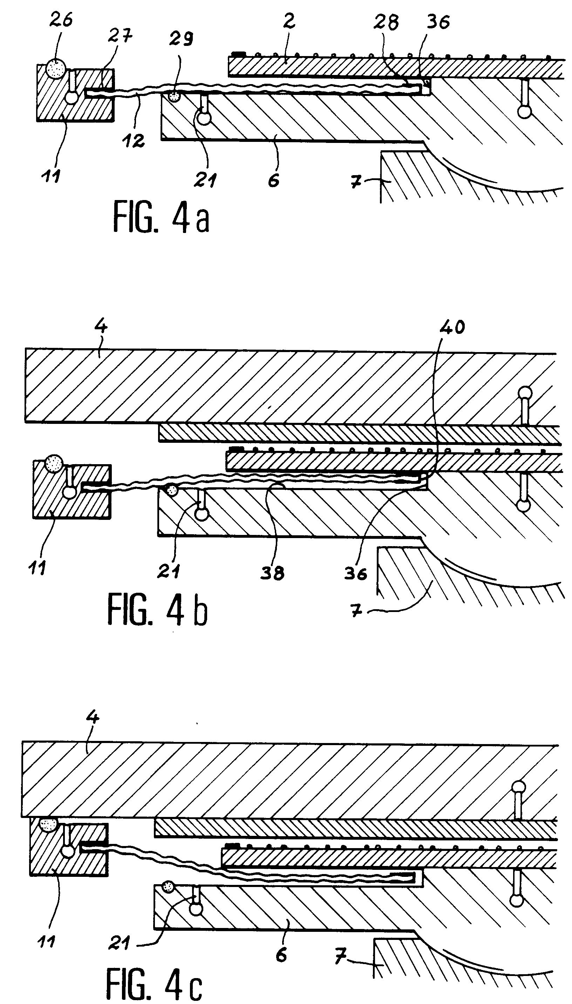

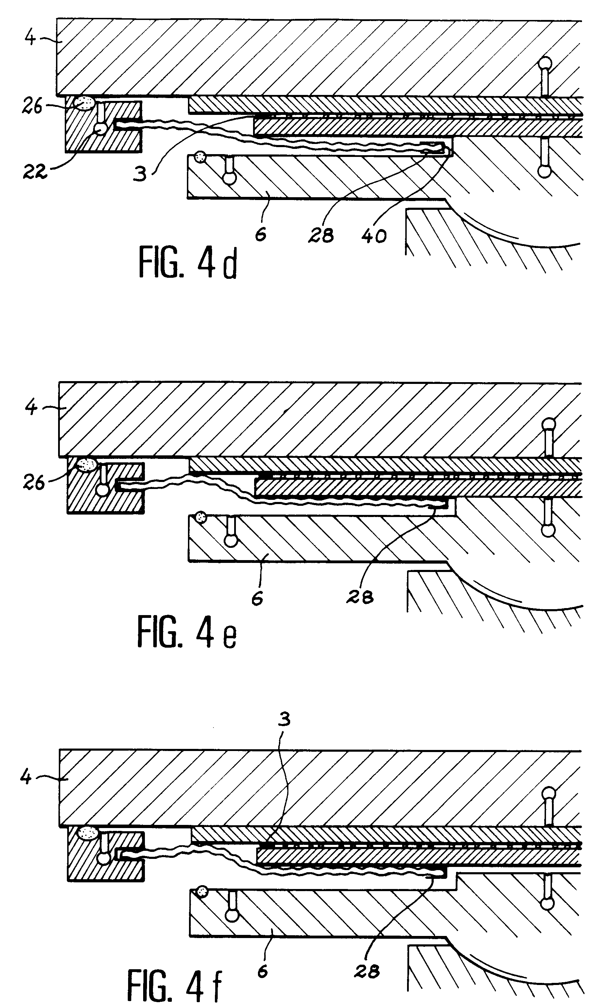

Comme représenté sur les figures 2, 3 et 5, le plus grand des deux substrats 1 est prépositionné à l'aide de trois butées réglables par excentriques 23 sur un plateau plan 4 dont les dimensions lui sont nettement supérieures. Le maintien se fait par aspiration grâce à un réseau de petites rainures réparties sous toute la surface du substrat et un moyen d'aspiration 19. Ce plateau est amené en position de travail après chargement du premier substrat par une rotation de 180 degrés de manière à recouvrir le deuxième substrat 2, lequel est tenu de la même manière sur une platine 6 mais par une surface réduite à un minimum. En pratique, cette surface est celle d'un cylindre central 36, la platine comprenant par ailleurs, un décrochement périphérique 38 (la forme de la platine apparaît mieux sur les figures 4a à 4f).

La platine est souple en rotation par rapport à deux axes horizontaux et fixe par rapport à l'axe vertical grâce à un palier sphérique 7 et des ressorts 8 de rappel en position horizontale. Le centre de rotation est situé au centre du substrat supérieur 1 et sur sa face supérieure.

Le second substrat 2 est prépositionné à l'aide d'un gabarit réglable que l'on retire une fois le substrat maintenu.

Les deux substrats portent chacun deux motifs complémentaires d'alignement situés dans des zones non fonctionnelles. L'entraxe de ces motifs est maximal pour augmenter la précision du positionnement.

Correspondant à ces motifs se trouvent, dans la platine 6 et le plateau 4, des logements recevant des systèmes de visée 13, 14 et 15 qui sont illustrés plus en détail sur la figure 5. Chaque système de visée est constitué essentiellement (cf fig. 5) d'un objectif 25, d'une caméra 15 avec son moniteur 24 et de deux systèmes d'éclairage, l'un par réflexion 14, l'autre par transmission 16.

Le plateau 4 étant dans sa position de chargement, l'éclairage par réflexion permet de visualiser les motifs et de régler la position du substrat pour les avoir au centre du champ optique. En position de travail, c'est l'éclairage par transmission qui est utilisé car il permet les meilleurs contrastes. La profondeur de champ de l'objectif permet de visualiser les motifs avant accostage.

Le positionnement relatif des deux substrats est effectué par déplacement dans le plan horizontal de la pièce 7 soutenant la platine. Un déplacement vertical 9 permet de mettre en contact les deux substrats. Le palier sphérique 7 autorise un auto-alignement en parallèlisme avec un très faible effort de déséquilibre dû aux ressorts de rappel 8.

Avec un système à moteurs pas à pas couplé à une commande impulsionnelle, on obtient une sensibilité de déplacement de 1 micron sans intervention manuelle sur la partie mécanique de la machine.

La partie de la platine ne servant pas au maintien du substrat 2 est légèrement abaissée par le décrochement 38, déjà évoqué, de manière à pouvoir intercaler un film 12 souple. Ce film peut comporter en surface un relief irrégulier, avec des creux et des bosses, à un pas voisin du millimètre. On peut utiliser par exemple un film gaufré.

Ce film est tenu par un cadre 11 (dont on aperçoit la coupe à gauche et à droite sur la figure 2). Ce cadre 11 est situé sous le plateau 4 et peut venir se plaquer sous ce plateau et à sa périphérie. L'étanchéité du contact plateau 4-cadre 11 est assurée par un joint souple 26. Des moyens d'aspiration 22 sont également prévus dans le cadre 11.

La partie centrale du film souple 12 est perforée sur un diamètre 40 de l'ordre de 50 mm. Cette ouverture permet le passage du cylindre central 36 de la platine 6 et l'appui du substrat 2 sur cette platine. L'aspiration du substrat 2 sur la platine 6 est assurée par des moyens 20 et cela pendant l'assemblage des plaques et jusqu'au pressage.

Le bord 40 du trou central du film 12 est muni, sur chaque face, d'une couche lisse faisant office de joint 28. Ce joint permet une bonne étanchéité film-platine au moment du prépositionnement du substrat 2. Au pressage, ce joint 28 assurera l'étanchéité au dos du substrat pour la mise sous vide de la cellule.

La platine 6 comporte enfin un joint 29, au voisinage du périmètre du substrat supérieur 1, ainsi qu'un moyen d'aspiration 21 situé sous le film 12.

En position de chargement, le cadre 11 est abaissé et le film 12 est aspiré sur la platine 6 par les moyens 21 pour ne pas toucher le substrat 2.

En position de réglage, le film n'est plus aspiré sur la platine par les moyens 21 et le cadre 11 est en position haute.

Lorsque le positionnement est terminé, le vide est fait dans l'espace limité par le plateau 4, le film 12, le substrat 2 et cela par les moyens 22. De par sa géométrie, le film 12 vient lentement se mettre en pression sous le substrat 2 jusqu'à ce que le joint du bord central 28 fasse étanchéité. A ce moment, le pompage met l'ensemble de la cellule sous vide et il y a pressage du substrat 2 contre le substrat 1. L'aspiration du substrat 2 sur la platine 6 est alors supprimée, puis la platine 6 légèrement descendue pour annihiler toute action des pièces mécaniques rigides sur la cellule (à l'exclusion du plateau 4). La cellule est alors prête pour la polymérisation de la col le de maintien.

Les deux substrats formant la cellule sont maintenus par un cordon de colle 3 situé à la périphérie du plus petit des deux substrats (dans l'exemple illustré à la périphérie du substrat 2).

La colle utilisée polymérise partiellement sous l'action des rayons ultraviolets. Pour terminer l'opération d'assemblage, la colle est insolée par points grâce à un faisceau de fibres optiques 18 qu'on voit mieux sur la figure 5. Ces fibres transmettent les rayons provenant d'une source ultraviolette 34. Les points insolés sont répartis sur le pourtour de collage.

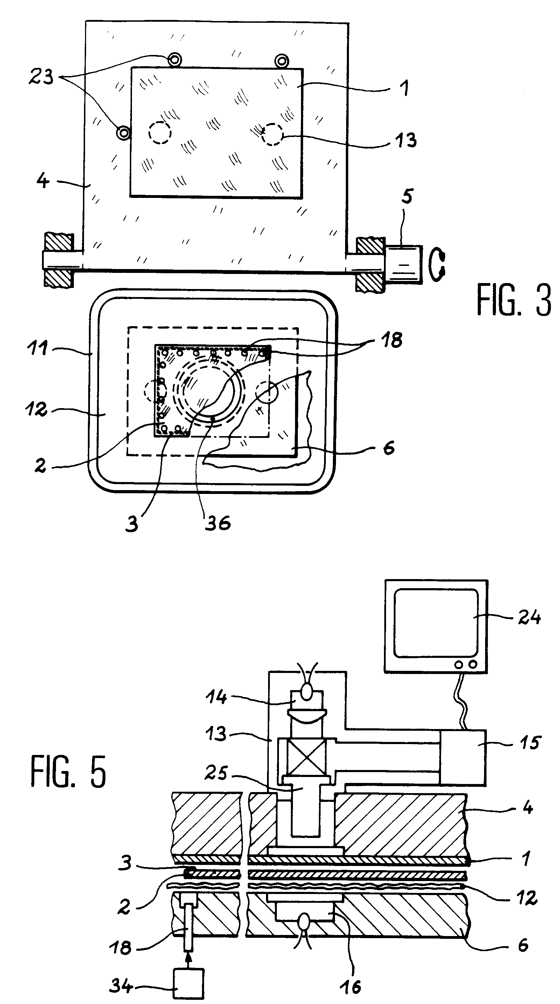

Le plateau 4 est amené de la position de chargement à la position de travail par une rotation d'un demi-tour créée par un vérin rotatif 5 comme représenté sur la figure 3. Il est immobilisé dans cette position à l'aide de verrous non représentés, par exemple des petits vérins.

Un système électronique permet d'automatiser partiellement le cycle des opérations d'assemblage en gérant et exécutant la plupart des opérations élémentaires. Ces opérations sont :
- l'aspiration du film 12 sur la platine 6,
- l'aspiration du substrat 1 contre le plateau 4,
- l'aspiration du substrat 2 sur la platine 6,
- la rotation du plateau 4 pour le retourner sur la platine 6,
- le verrouillage du plateau 4,
- la relâche du film 12 et la montée du cadre 11,
- le réglage en X, Y et en angle pendant l'approche et la mise en contact,
- l'aspiration entre le plateau 4 et le film 12, et le pressage des deux substrats,
- la relâche du substrat 2 par cessation de l'aspiration 20,
- la descente de la platine 6,
- l'insolation aux ultraviolets par points de la colle 3,
- le déverrouillage et l'ouverture du plateau 4 par rotation,
- la relâche de la cellule assemblée fixée au plateau 4.

On comprendra mieux le fonctionnement de la machine à l'aide de la description chronologique des opérations illustrées sur les figures 4a à 4f.
1. On positionne le sustrat 1 avec ses espaceurs sur le plateau 4 en prenant appui sur les pions 23. Une commande actionne l'aspiration sous ce substrat et simultanément l'aspiration du film 12 sur la platine 6 (fig. 4a). On peut alors observer sur l'écran de visualisation 24 via la caméra 15, que les motifs d'alignement de l'électrode sont bien placés dans le champ optique.
2. On positionne ensuite le substrat 2 avec son joint de colle sur la platine 6, grâce à une équerre mobile. Une commande actionne l'aspiration de ce substrat puis la coupure du vide sous le film 12.
3. Une commande actionne la rotation du plateau 4 pour superposer les deux substrats (fig. 4b).
4. A l'aide d'un moteur, on monte la table 9 pour amener le premier substrat en contact avec le second, tout en réalisant l'alignement des deux substrats au moyen des moteurs pas à pas en X, Y et en rotation. Quand les deux substrats sont au contact, une commande fait monter le cadre 11 qui porte le film, en contact avec le plateau 4 (fig. 4c et 4d). Eventuellement, on rectifie l'alignement. Ensuite, une commande crée l'aspiration entre le film 12 et les substrats pour écraser le joint de colle 3 jusqu'à ce que les espaceurs jouent leur rôle (fig. 4e). Enfin, on coupe le vide sous le substrat 2 et on redescend d'environ 0,2 mm la platine 6 (fig. 4f). Le substrat 2 est alors tenu uniquement par le film 12 avec une pression uniforme, car le film épouse la forme du substrat. Des différences d'épaisseur du substrat n'entraînent pas de différences de pression à l'assemblage. Le gaufrage du film souple permet une bonne propagation du vide jusqu'au joint central 28.
5. Une commande allume la lampe ultraviolette 34 et les fibres optiques 18 guident le rayonnement pour insoler localement la colle 3. L'adhésif ainsi polymérisé fixe l'assemblage des deux substrats 1 et 2.
6. Pour le déchargement, une commande coupe le vide de pressage 22, redescend le cadre 11 ainsi que la platine 6, actionne la rotation du plateau 4 pour le ramener en position de repos et coupe l'aspiration 19 du substrat supérieur. La cellule est alors disponible pour compléter l'insolation de la colle dans un simple châssis d'insolation à vide, type circuit imprimé.

On peut, sans inconvénient, placer la plaque contre-électrode avec son joint de colle sur le plateau 4 et la plaque électrode avec ses espaceurs sur la platine 6. Le seul impératif est d'avoir, sur le plateau 4, le substrat le plus grand.

## Revendications

1. Machine d'assemblage pour cellules à cristaux liquides, caractérisée par le fait qu'elle comprend :
a) un plateau mobile (4) apte à recevoir un premier substrat (1) d'une cellule à assembler, ce plateau (4) étant muni de premiers moyens d'aspiration (19) aptes à maintenir le premier substrat (1) plaqué sur le plateau (4),
b) une platine (6) réglable en position avec une partie centrale (36) apte à recevoir un second substrat (2) de la cellule à assembler et avec un décrochement périphérique (38) ménageant un espace libre entre la platine (6) et le second substrat (2), cette platine (6) étant munie de deuxièmes moyens d'aspiration (20) aptes à maintenir le second substrat (2) plaqué sur la platine (6), et de troisièmes moyens d'aspiration (21) dans le décrochement (38),
c) des moyens (5) pour retourner le plateau mobile (4) avec son premier substrat (1) pour l'amener au-dessus de la platine (6) avec son second substrat (2), le premier substrat (1) venant ainsi au-dessus du second (2),
d) un cadre (11) est disposé autour de la platine (6) et sous la périphérie du plateau (4), ce cadre étant muni, à sa partie supérieure, d'un joint d'étanchéité (26),
e) des moyens pour déplacer ce cadre (11) verticalement pour l'amener, soit en position basse sensiblement au niveau de la platine (6), soit en position haute pour le plaquer sous le plateau (4) lorsque celui-ci a été retourné au-dessus de la platine (6),
f) un film souple fixé, avec des moyens d'étanchéité (27) à sa périphérie, au cadre (11) et percé en son centre d'une ouverture (40) correspondant à la partie centrale (36) de la platine (6), ce film occupant l'espace ménagé (38) entre le décrochement de la platine (6) et le second substrat (2),
g) des quatrièmes moyens d'aspiration (22) dans le volume compris entre le plateau (4) et le film (12), ce film (12) pouvant ainsi soit être plaqué sur le décrochement de la platine (6) par action des troisièmes moyens d'aspiration (21) de la platine lorsque le cadre (11) est en position basse, soit venir presser sur l'ensemble premier substrat (1)-second substrat (2) par action des quatrièmes moyens d'aspiration (22) lorsque le cadre (11) est en position haute, les deuxièmes moyens d'aspiration (21) de la platine (6) ayant été rendus inopérants.

2. Machine selon la revendication 1, caractérisée par le fait que les moyens d'aspiration (22) dans le volume compris entre le plateau (4) et le film (12) pour presser le film sur l'ensemble premier et second substrats (1, 2) sont disposés dans le cadre (11).

3. Machine selon la revendication 1, caractérisée par le fait que le film souple (12) est gaufré.

4. Machine selon la revendication 1, caractérisée par le fait que l'ouverture circulaire (40) du film souple (12) est pourvue de moyens (28) assurant un contact étanche avec l'arrière du second substrat (2) pendant le pressage du film (12) sur l'ensemble premier-second substrats (1, 2).

5. Machine selon la revendication 1, caractérisée par le fait que la platine (6) est montée sur des moyens de réglage de position par un système à palier sphérique (7) et à ressorts (8).

6. Machine selon la revendication 5, caractérisée par le fait que les moyens de réglage comporte une table élévatrice (9) et une table de mouvements horizontaux (10).

7. Machine selon la revendication 6, caractérisée par le fait que la table de mouvements horizontaux (10) et la table élévatrice (9) sont commandés par des moteurs pas à pas.

8. Machine selon l'une quelconque des revendications 1 à 7, caractérisée par le fait qu'elle comprend en outre, dans et à travers la platine (6), des moyens d'insolation de points du pourtour du second substrat (2) où est disposé un joint de colle (3).

9. Machine selon la revendication 8, caractérisée par le fait que les moyens d'insolation comprennent au moins une source ultraviolette (34) et des fibres optiques (18) guidant la lumière ultraviolette émise par la source (34) à travers la platine (6) jusqu'à la périphérie du second substrat (2).

10. Machine selon l'une quelconque des revendications 1 à 9, caractérisée par le fait qu'elle comprend en outre un système de visée monté sur et à travers le plateau (4), ce système permettant une visée à la périphérie des premier et second substrats (1, 2).

11. Machine selon la revendication 10, caractérisée par le fait que le système de visée comprend des moyens d'éclairage par réflexion (14).

12. Machine selon la revendication 10, caractérisée par le fait que le système de visée comprend des moyens d'éclairage par transmission (16).
